# EUROPEAN PATENT APPLICATION

(11) **EP 2 247 114 A1**
(43) Date of publication of application: **03.11.2010**
(21) Application number: 09305372.6
(22) Date of filing: 29.04.2009
(51) Int. Cl.: H04N 13/00

(54) **Method and a device for generating and processing depth data**

(71) Applicant: Thomson Licensing, 92130 Issy-les-Moulineaux (FR)
(72) Inventor: Boisson, Guillaume, 35137 Pleumeleuc (FR); Kerbiriou, Paul, 35235, Thorigne Fouillard (FR); Le Meur, Olivier, 35160, Talensac (FR)
(74) Representative: Rittner, Karsten

(57) **Abstract**

The invention proposes a method for generating and processing depth data associated with a mapping of first image data comprised in a first image onto second image data comprised in at least a second image.

Said method comprising the steps of generating a control signal which depends on a first saliency value determined using the first image data, wherein said control signal further depends on at least a second saliency value determined using the second image data, generating depth data using said mapping and processing the depth data wherein generating and/or processing of depth data is dependent on said control signal.

This allows for more accurate generation and/or processing of the depth data in regions which are visually attracting and thus more likely in the focus of a viewer's attention.

## Description

### Technical Field

The invention is related to a method and a device for generating and processing depth data. Said depth data is associated with a mapping of first image data comprised in a first image onto second image data comprised in at least a second image.

### Background

An image is a two dimensional (2D) projection on an image plane located at a view point wherein the view point has a location and an orientation.

Due to the projection, some or all depth information comprised in a scene depicted by an image is lost.

It is known that a second image may be used for preserving the depth information, implicitly, and for allowing a viewer to vary the orientation within a small range. That is, a scene is stereoscopically depicted by help of two images taken from two slightly different view points, like the eyes of a human, the difference depending on the focal length used. One of the images is provided to the right eye and the other is provided to the left eye. This allows a viewer for experiencing the depth of the scene and to vary the orientation of the view point within said small range. But the location of the viewpoint remains fixed.

There is a trend in the art towards flexible viewpoint applications like free viewpoint TV (FTV) which allow a viewer to freely vary not only the orientation of the viewpoint but also the location.

For making the location of the viewpoint freely variable as well, depth data has to be available. Depth data is an explicit representation of depth information, for instance in form of a depth map, in form of a three-dimensional model of structures comprised in a depicted scene or in form of a set of layered images or depth planes.

Using one or more images and depth data, views of a scene from arbitrary located and/or orientated viewpoints may be generated automatically in response to a viewer's input determining a desired viewpoint.

Depth data may be collected using dedicated depth scanning devices based on laser ranging, ultrasonic ranging or the like. Another way of generating depth data is based on a mapping between images without using dedicated depth sensors. Such mapping -also known as disparity mapping- is based on the fact that relative dislocation between a place of depiction of a feature in one of the images and a place of depiction of the same feature in the other of the images is reciprocally proportional to the distance of said feature to the images.

Depth data may be corrupted in different ways. For instance, due to the reciprocal relationship minor errors in determining disparities of closed by features may result in severely erroneous depth data. Other sources of corruption are quantization during encoding and packet loss during transmission.

### Invention

The inventors recognized that such corruptions more or less impede the viewer's viewing experience in dependency on the degree of attention the viewer spends on image aspects generated using said corrupted depth data.

Therefore, the invention proposes a method for generating and processing depth data associated with a mapping of first image data comprised in a first image onto second image data comprised in at least a second image, said method comprising the features of independent claim 1. A corresponding device is proposed which comprises the features of independent claim 6.

Said method comprises the steps of generating a control signal which depends on a first saliency value determined using the first image data, wherein said control signal further depends on at least a second saliency value determined using the second image data, generating depth data using said mapping and processing the depth data wherein generating and/or processing of depth data is dependent on said control signal.

Making generation and/or processing of depth data dependent on saliency values which are determined for that image data whose mapping is associated with said depth data allows for more accurate generation and/or processing of the depth data in regions which are visually attracting and thus more likely in the focus of a viewer's attention.

Further advantageous embodiments of the method are characterized by the features of one of the claims depending on claim 1 and further advantageous embodiments of the device are characterized by the features of one of the claims depending on claim 6.

### Drawings

Exemplary embodiments of the invention are illustrated in the drawings and are explained in more detail in the following description.

In the figures:
- Fig. 1: depicts an exemplarily flow chart of generating and processing of a depth map which may be used in single frame plus depth (2D+z) or a multiview plus depth (MVD) encoding, for instance, and
- Fig. 2: depicts an exemplarily flow chart of generating and processing of a mesh-based three dimensional model, for instance.

### Exemplary embodiments

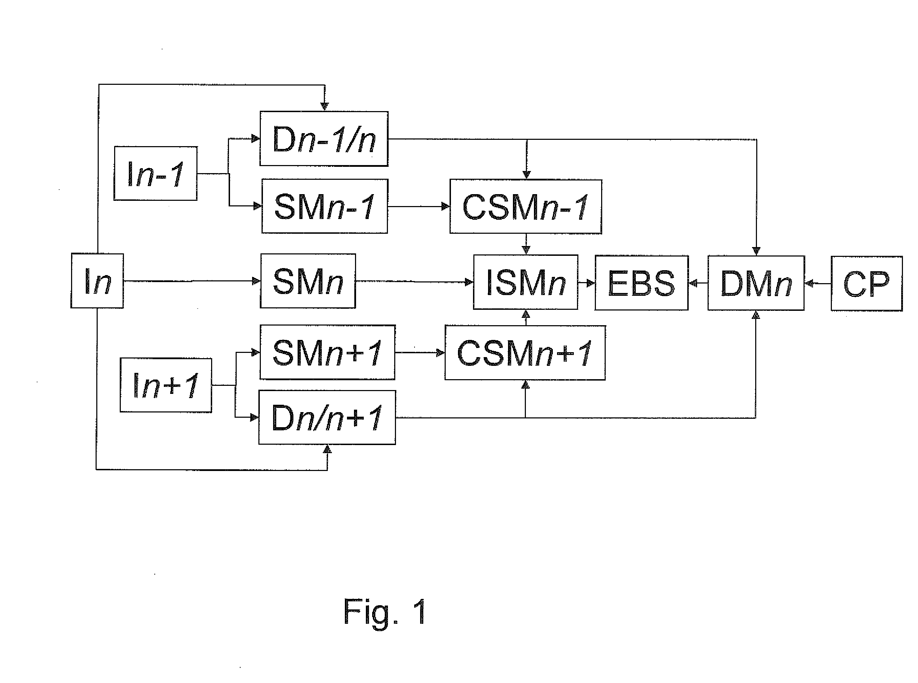

An exemplarily flow chart of generating and processing of an integrated depth map DMn according to an exemplary embodiment of the inventive principle is depicted in Fig. 1.

The integrated depth map DMn is based on camera parameters CP and generated from disparity maps D*n*-1/*n* and D*n*+1/*n* which are generated from image I*n* and image I*n*-1, respectively, from image I*n* and image I*n*+1.

Disparity maps D*n*-1/*n* and D*n*+1/*n* are not only used for generating the integrated depth map DMn but also for warping or compensating saliency maps S*n*+1 and S*n*-1 which are saliency maps generated from image I*n*+1 and image I*n*-1. Compensation or warping results in compensated saliency maps CS*n*+1 and CS*n*-1 which are aligned with saliency map S*n* generated from image I*n* and therefore can be fused with or integrated into said saliency map S*n* generated from image I*n* which results in an integrated saliency map ISM*n*.

Thus, there are the integrated depth map DMn for image *n* as well as an integrated saliency map which allows for a region-of-interest based encoding of the integrated depth map DMn into an encoded bitstream EBS.

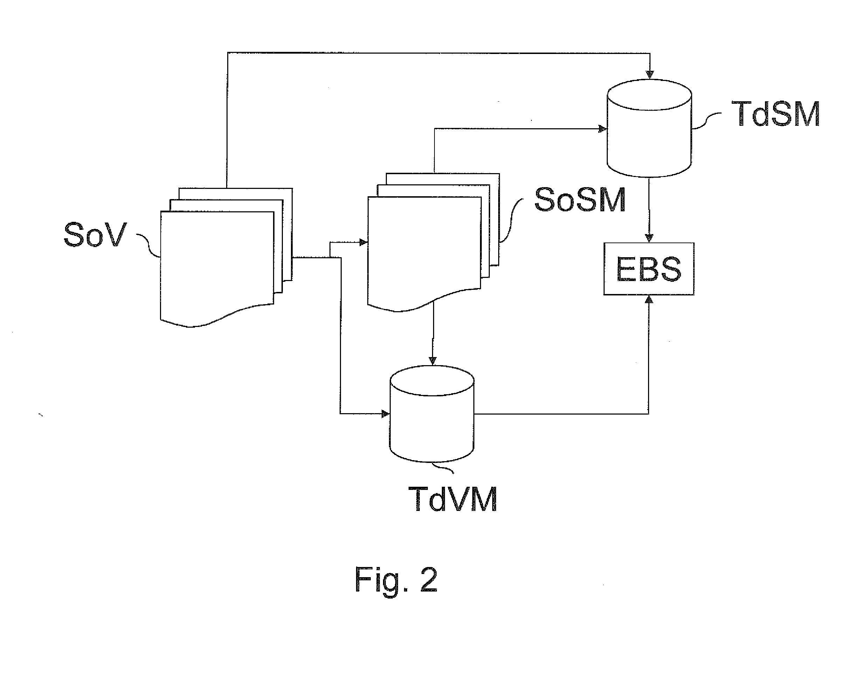

Another exemplarily flow chart of the inventive principle is depicted in Fig. 2.

From a set SoV of two or more views another set SoSM of a corresponding number of saliency maps is generated. The generated set SoSM of saliency maps as well as the set SoV of views are used for extracting one or more three dimensional models TdVM of one or more objects or structures at least partly depicted in the views of the set SoV of views.

The modelling is based on depth information determined using two or more views of said set SoV of views and controlled by saliency information determined using corresponding saliency maps of said set SoSM of saliency maps. That is, the more salient a surface region of a modelled object or structure is, the more detailed said surface region is modelled. For instance, in a mesh model the number of facets, nodes and/or edges is increased such that the size of facets in salient areas is reduced and approximation of the surface of the modelled object or structure is more precise in salient areas.

Commonly, modelling is based on disparities of pairs of image regions of which one is comprised in a first view of the modelled object or structure and one is comprised in a second view of the modelled object or structure wherein said second view depicts the object or scene from a different viewpoint than said first view and the images regions of each pair are determined as depicting a same aspect of the object or structure to-be-modelled.

The extracted three dimensional models TdM may then be encoded into an encoded bitstream EBS wherein a region-of-interest based encoding is used which is based on one or more three dimensional saliency models TdSM of the modelled objects or structures.

The claimed method may be implemented on a processing device comprised in a notebook, a desktop computer, a server or any other computing device. The computing device may further comprise a storage medium like a hard disk, a BluRay-disk or a flash memory carrying image data of images.

The processing device may be operated as a saliency value determining device which uses image data for determining corresponding saliency values.

The processing device may further be operated as a control signal generator which generates control signals in dependency on determined saliency values.

And, the processing device may further be operated as a mapping device which maps first image data comprised in a first image onto second image data comprised in at least a second image.

The processing device may also be operated as a depth data generator which generates depth data in dependency on determined mappings and the generated control signal and/or the processing device may also be operated as a depth data processor which processes depth data in dependency on the generated control signal.

The exemplary embodiments of the invention are described for illustrative purposes only and shall not be construed as limiting the extent of projection as requested which is solely defined by the independent claims.

## Claims

1. Method for generating and processing depth data associated with a mapping of first image data comprised in a first image onto second image data comprised in at least a second image, said method comprises the steps of
- generating a control signal which depends on a first saliency value determined using the first image data, wherein said control signal further depends on at least a second saliency value determined using the second image data,
- generating depth data using said mapping and
- processing the depth data wherein
- generating and/or processing of depth data is dependent on said control signal.

2. Method according to claim 1, wherein generating said depth data comprises generating one or more nodes of a mesh model and assigning one or more further saliency values to the generated nodes with the number of generated nodes and/or values of the further saliency values being dependent on said control signal.

3. Method according to one of the preceding claims, wherein processing of the depth data comprises lossy compression of the depth data and said control signal is used for controlling a degree of compression loss.

4. Method according to one of the preceding claims, wherein processing of the depth data comprises ordered encoding of the depth data together with further depth data in a code sequence and said control signal is used for determining a rank in the encoding order.

5. Method according to one of the preceding claims, wherein the control signal is generated dependent on a sum of said first saliency value and said at least a second saliency value.

6. Device for generating and processing depth data associated with a mapping of first image data comprised in a first image onto second image data comprised in at least a second image, said device comprises
- means for generating a control signal which depends on a first saliency value determined using the first image data, wherein said control signal further depends on at least a second saliency value determined using the second image data,
- means for generating depth data using said mapping,
- means for processing depth data and
- a controller adapted for using said control signal for controlling said generation and/or processing of the depth data.

7. Device according to claim 6, wherein said means for generating depth data is adapted for generating one or more nodes of a mesh model and assigning one or more further saliency values to the generated nodes with the controller being adapted for controlling the number of generated nodes and/or values of the further saliency values in dependence on said control signal.

8. Device according to one of the claims 6 or 7, wherein processing of the depth data comprises lossy compression of the depth data and the controller is adapted for using said control signal for controlling a degree of compression loss.

9. Device according to one of the claims 6-8, wherein processing of the depth data comprises ordered encoding of the depth data together with further depth data in a code sequence and the controller is adapted for using said control signal for determining a rank in an encoding order.

10. Device according to one of the claims 6-9, wherein means for generating a control signal is adapted for generating the control signal dependent on a sum of said first saliency value and said at least a second saliency value.

11. Device according to claim 10 or method according to claim 5, wherein said sum is a weighted sum.
